# EUROPEAN PATENT APPLICATION

(11) **EP 3 527 860 A1**
(43) Date of publication of application: **21.08.2019**
(21) Application number: 17861851.8
(22) Date of filing: 16.10.2017
(51) Int. Cl.: F16J 15/34

(54) **SEALING DEVICE**

(30) Priority: 17.10.2016 JP 2016203850
(71) Applicant: NOK Corporation, Tokyo 105-8585 (JP)
(72) Inventor: WATANABE, Toshiki, Fukushima-shi Fukushima 960-1193 (JP); IWAI, Haruki, Fukushima-shi Fukushima 960-1193 (JP)
(74) Representative: TBK
(86) International application number: PCT/JP2017/037309
(87) International publication number: WO 2018/074395

(57) **Abstract**

A sealing device that can suppress entrance of foreign matter into a place between the end surface of a rotating ring and the end surface of a fixed ring. A sealing device 10 that seals the annular gap between a rotating shaft and a housing having a shaft bore into which the rotating shaft is inserted includes a rotating ring unit 100 provided to the rotating shaft and a fixed ring unit 200 provided to the housing. A plurality of protrusions 140 configured to generate an airflow from the rotating ring 130 side to the fixed ring 230 side when the rotating ring unit 100 rotates are provided on the inner peripheral surface of the rotating ring 130.

## Description

### [Technical Field]

The present invention relates to a sealing device that seals the annular gap between a rotating shaft and a housing.

### [Background Art]

A sealing device that seals the annular gap between a rotating shaft and a housing has been known, in which the end surface of a rotating ring provided to the rotating shaft and the end surface of a fixed ring provided to the housing are configured to slide on each other. Such a device may have issues of diminished performance and advancing sliding abrasion due to foreign matter entering between the end surface of the rotating ring and the end surface of the fixed ring.

### [Citation List]

### [Patent Literature]

[PTL 1]
   WO 2014/173424
[PTL 2]
   WO 2014/173495

### [Summary of Invention]

### [Technical Problem]

It is an object of the present invention to provide a sealing device that can suppress entrance of foreign matter into a place between the end surface of a rotating ring and the end surface of a fixed ring.

### [Solution to Problem]

The present invention employs the following means to achieve the above object.

A sealing device that seals an annular gap between a rotating shaft and a housing having a shaft bore into which the rotating shaft is inserted, the sealing device including
a rotating ring unit provided to the rotating shaft and
a fixed ring unit provided to the housing, wherein
the rotating ring unit includes
an annular member having a cylindrical part fixed to the rotating shaft and an outward flange part provided at an end of the cylindrical part and
a rotating ring fixed to the annular member with an annular gap formed between the rotating ring and an outer peripheral surface of the cylindrical part,
the fixed ring unit includes
a reinforcing ring fixed to the shaft bore of the housing,
a fixed ring configured to slide on an end surface of the rotating ring, and
an annular elastic body, one end of which is fixed to the reinforcing ring and the other end of which is fixed to the fixed ring, the annular elastic body pressing the fixed ring against the rotating ring, and
a plurality of protrusions configured to generate an airflow from a rotating ring side to a fixed ring side when the rotating ring unit rotates are provided on at least one of an inner peripheral surface of the rotating ring and an outer peripheral surface of the cylindrical part.

This configuration where an airflow is generated from the rotating ring side to the fixed ring side when the rotating ring unit rotates makes it hard for foreign matter to enter toward the rotating ring side from the fixed ring side and suppresses the entrance of the foreign matter into a place between the end surface of the rotating ring and the end surface of the fixed ring.

Each of the plurality of protrusions may be inclined from the fixed ring side to the rotating ring side, from an upstream side toward a downstream side in a rotating direction of the rotating ring unit.

Thus, an airflow can be effectively generated from the rotating ring side to the fixed ring side when the rotating ring unit rotates.

An annular protrusion part that protrudes toward the fixed ring side and extends up to a radially inward position of the fixed ring may be provided near the inner peripheral surface of the rotating ring, and the plurality of protrusions may be provided on an inner peripheral surface of the annular protrusion part.

This configuration provides the annular protrusion part at a radially inward position of a part where the rotating ring and the fixed ring slide, thus the entrance of foreign matter into the sliding part can be more effectively suppressed. In addition, since an airflow directed to the fixed ring side from the rotating ring side is generated at a radially inward position of the fixed ring, the entrance of foreign matter into the sliding part between the rotating ring and the fixed ring can be more effectively reduced.

A dynamic pressure generating groove may be provided on at least one of a sliding surface of the rotating ring facing the fixed ring and a sliding surface of the fixed ring facing the rotating ring, the dynamic pressure generating groove being configured to generate dynamic pressure for separating the sliding surfaces from each other when the rotating ring rotates.

Thus, the sliding friction between the rotating ring and the fixed ring can be reduced or eliminated.

The above configurations can be combined with each other to a greater extent to be employed.

### [Advantageous Effects of Invention]

As described above, it is possible to suppress entrance of foreign matter into a place between the end surface of the rotating ring and the end surface of the fixed ring according to the present invention.

### [Brief Description of Drawings]

[Fig. 1]

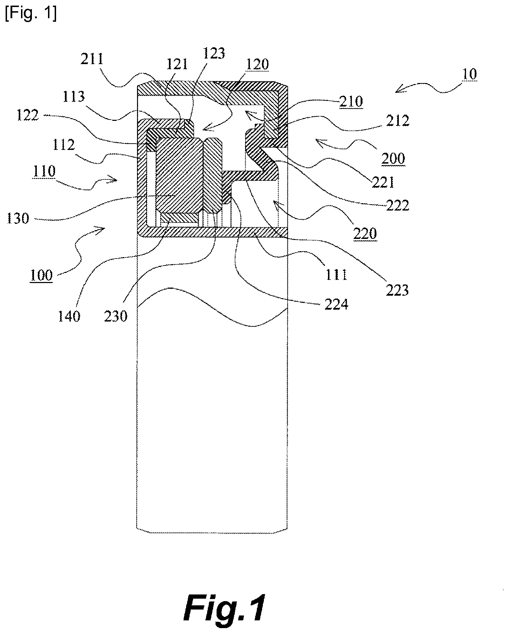

   Fig. 1 is a schematic cross-sectional view of a sealing device of Example 1.
[Fig. 2]

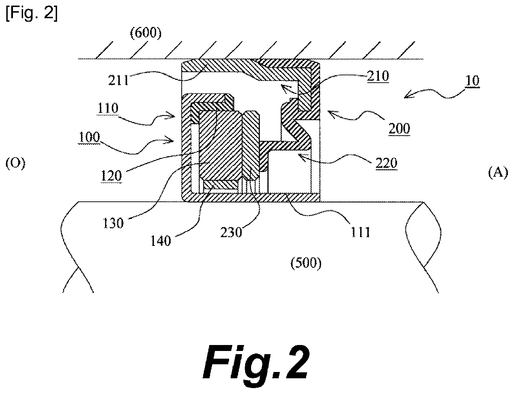

   Fig. 2 is a schematic cross-sectional view showing a sealing structure of Example 1.
[Fig. 3]

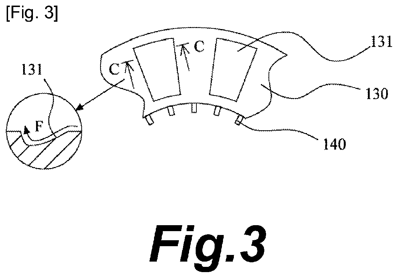

   Fig. 3 is a part of a side view of a rotating ring of Example 1.
[Fig. 4]

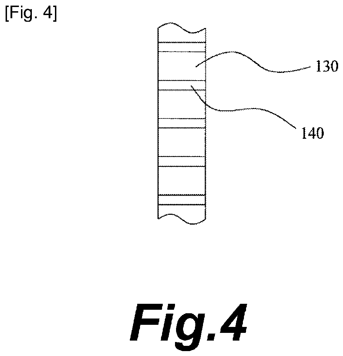

   Fig. 4 is a part of a view of the rotating ring of Example 1 when seen from its inner peripheral surface side.
[Fig. 5]

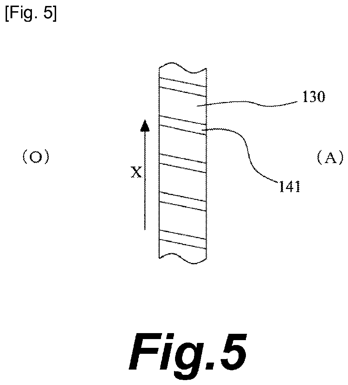

   Fig. 5 is a part of a view of a modified example of the rotating ring of Example 1 when seen from its inner peripheral surface side.
[Fig. 6]

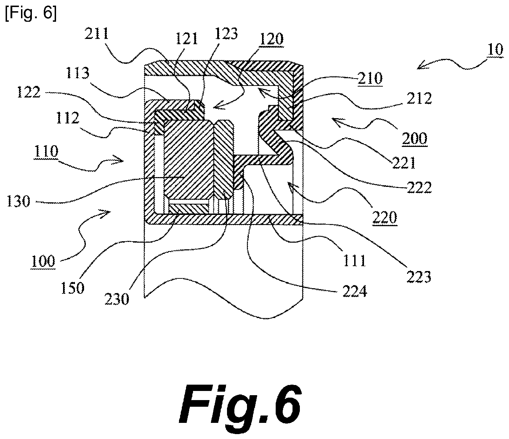

   Fig. 6 is a schematic cross-sectional view of a sealing device of Example 2.
[Fig. 7]

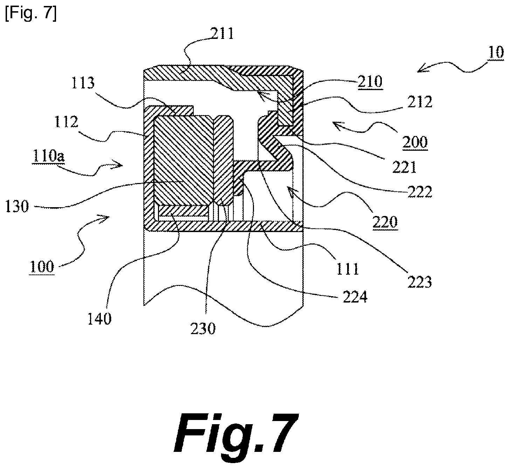

   Fig. 7 is a schematic cross-sectional view of a sealing device of Example 3.
[Fig. 8]

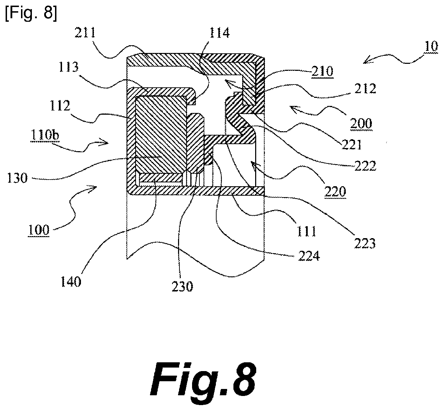

   Fig. 8 is a schematic cross-sectional view of a sealing device of Example 4.
[Fig. 9]

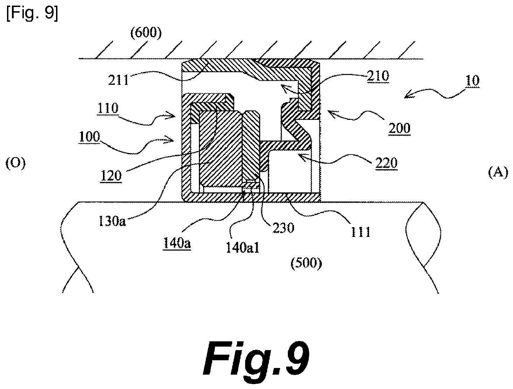

   Fig. 9 is a schematic cross-sectional view showing a sealing structure of Example 5.
[Fig. 10]

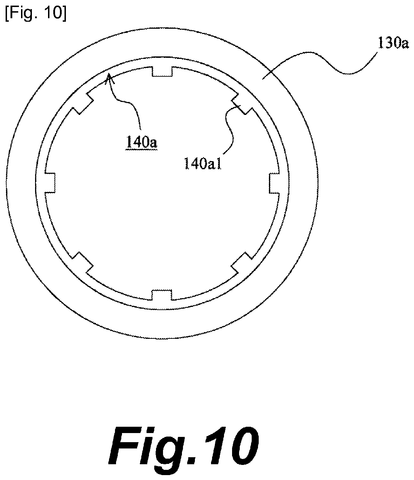

   Fig. 10 is a side view of a rotating ring of Example 5.

### [Description of Embodiments]

Hereinafter, modes for carrying out the present invention will be illustratively described in detail based on embodiments. However, the dimensions, materials, shapes, their relative arrangements, or the like of constituents described in the embodiments will not intend to limit the scope of the present invention unless otherwise specifically described.

### (Example 1)

A sealing device of Example 1 of the present invention will be described with reference to Figs. 1 to 5. Fig. 1 is a schematic cross-sectional view of the sealing device of Example 1. The sealing device of Example 1 has a substantially rotationally symmetrical shape except for some members, and Fig. 1 shows a cross-sectional view of the sealing device cut off at a plane including its central axis. Fig. 2 is a schematic cross-sectional view showing a sealing structure of Example 1. Fig. 2 shows a cross-sectional view of the sealing device cut off at a plane including a central axis like Fig. 1. Fig. 3 is a part of a side view of a rotating ring of Example 1. The drawing in a circle in Fig. 3 shows a cross-sectional view indicated by C-C line in the side view. Fig. 4 is a part of a view of the rotating ring of Example 1 when seen from the inner peripheral surface side. Fig. 5 is a part of a view of a modified example of the rotating ring of Example 1 when seen from the inner peripheral surface side.

### <Entire Configuration of Sealing Device>

The entire configuration of a sealing device 10 of Example 1 will be described. The sealing device 10 of Example 1 is used to seal an annular gap between a rotating shaft 500 and a housing 600 having a shaft bore into which the rotating shaft 500 is inserted. In Fig. 2, a left side is a sealed region side (O) in which a fluid to be sealed (such as oil) is sealed, while a right side is an air side (A) which is an opposite side to the sealed region side (O).

The sealing device 10 of Example 1 includes a rotating ring unit 100 provided to the rotating shaft 500 and a fixed ring unit 200 provided to the housing 600. The rotating ring unit 100 is configured to rotate with the rotating shaft 500.

Further, the rotating ring unit 100 includes a metal annular member 110, a rotating ring 130 fixed to the annular member 110, and a fitting member 120 made of elastic-body provided on the annular member 110 for easy fitting and fixing of the rotating ring 130 into the annular member 110. The annular member 110 has an inner cylindrical part 111 fixed to an outer peripheral surface of the rotating shaft 500, an outward flange part 112 provided at an end of the inner cylindrical part 111 (an end on the sealed region side (O)), and an outer cylindrical part 113 provided at the tip end of the outward flange part 112. The inner cylindrical part 111 and the outer cylindrical part 113 are configured to extend from the respective ends of the outward flange part 112 in the same direction (the direction toward the air side (A)).

The fitting member 120 is made of an elastic body such as rubber. The fitting member 120 includes a cylindrical part 121 fixed to an inner peripheral surface of the outer cylindrical part 113 of the annular member 110, an inward flange part 122 provided on one end side (the sealed region side (O)) of the cylindrical part 121, and an outward flange part 123 provided on the other end side (the air side (A)) of the cylindrical part 121. The inward flange part 122 is fixed to the outward flange part 112 of the annular member 110 making a close contact therewith, and the outward flange part 123 is fixed to the tip end surface of the outer cylindrical part 113 of the annular member 110 making a close contact therewith.

The rotating ring 130 is inserted up to a position at which the rotating ring 130 abuts against the inward flange part 122 of the fitting member 120 fixed to the annular member 110 and is fitted and fixed with its outer peripheral surface making a close contact with an inner peripheral surface of the cylindrical part 121 of the fitting member 120. The rotating ring 130 is fixed to the annular member 110 with an annular gap formed between the rotating ring 130 and an outer peripheral surface of the inner cylindrical part 111 of the annular member 110. The rotating ring 130 is made of a highly rigid material such as metal and a resin (for example, PPS).

The fixed ring unit 200 includes a reinforcing ring 210 fixed to the shaft bore of the housing 600, a fixed ring 230 provided slidably on the end surface of the rotating ring 130, and an annular elastic body 220 that presses the fixed ring 230 against the rotating ring 130. The annular elastic body 220 has its one end side fixed to the reinforcing ring 210 and the other end side fixed to the fixed ring 230. The reinforcing ring 210 includes a cylindrical part 211 fixed by fitting to an inner peripheral surface of the shaft bore of the housing 600 and an inward flange part 212 provided at the end (the end on the air side (A)) of the cylindrical part 211.

The annular elastic body 220 is made of an elastic body such as rubber. The annular elastic body 220 includes a fixed part 221 fixed to the inward flange part 212 of the reinforcing ring 210 and a tapered part 222 extending from the inner peripheral surface of the fixed part 221 toward the air side (A) with its diameter decreasing. The annular elastic body 220 includes a cylindrical part 223 extending from a radially inward tip end of the tapered part 222 toward the sealed region side (O) and an inward flange part 224 provided at the tip end of the cylindrical part 223. The inward flange part 224 is fixed to the fixed ring 230 by bonding. The fixed ring 230 is fixed to the annular elastic body 220 with an annular gap formed between the fixed ring 230 and the outer peripheral surface of the inner cylindrical part 111 of the annular member 110. The fixed ring 230 is made of a highly rigid material such as metal and a resin (for example, PPS).

A plurality of protrusions 140 are provided on the inner peripheral surface of the rotating ring 130 of Example 1 (see Figs. 3 and 4). The plurality of protrusions 140 perform the function of generating an airflow from the rotating ring 130 side to the fixed ring 230 side when the rotating ring unit 100 rotates. Specifically, when the rotating ring unit 100 rotates, an airflow is generated by the plurality of protrusions 140 from the annular gap between the rotating ring 130 and the inner cylindrical part 111 toward the annular gap between the fixed ring 230 and the inner cylindrical part 111. The plurality of protrusions 140 are provided at even intervals in a circumferential direction. The plurality of protrusions 140 may be integrally provided on the rotating ring 130, or can be constituted by a member different from that of the rotating ring 130 and attached to the rotating ring 130. In the latter case, the plurality of protrusions 140 can be made of a material different from that of the rotating ring 130. The material of the plurality of protrusions 140 is not limited to metal or a resin, but a rubber material can be, for example, used.

A plurality of dynamic pressure generating grooves 131 that generate dynamic pressure, when the rotating ring 130 rotates, which separates sliding surfaces from each other, are provided on the sliding surface of the rotating ring 130 facing the fixed ring 230. When the rotating ring unit 100 rotates, the fixed ring 230 moves in a direction away from the rotating ring 130 against the pressing force of the annular elastic body 220 due to the dynamic pressure of the dynamic pressure generating grooves 131. The sliding surface of the rotating ring 130 facing the fixed ring 230 is the end surface of the rotating ring 130 on the fixed ring 230 side (the air side (A)). The sliding surface of the fixed ring 230 facing the rotating ring 130 is the end surface of the fixed ring 230 on the rotating ring 130 side (the sealed region side (O)).

A known technology can be used for the dynamic pressure generating grooves 131 so long as grooves generate dynamic pressure in the gap between the rotating ring 130 and the fixed ring 230 when the rotating ring 130 rotates. The groove bottoms of the dynamic pressure generating grooves 131 of Example 1 are constituted by smoothly curved surfaces as shown in the C-C cross-sectional view in Fig. 3. The rotating ring 130 is configured to rotate in a clockwise direction in Fig. 3. The dynamic pressure generating grooves 131 have unevenly distributed deep bottoms on an upstream side in the rotating direction. When the rotating ring 130 rotates, a fluid (gas or oil in Example 1) flows in a direction indicated by arrow F in Fig. 3 from the effect of the dynamic pressure generating grooves 131 configured as described above. This generates force in a direction separating the sliding surface of the rotating ring 130 and the sliding surface of the fixed ring 230 from each other. Even when the sliding surface of the rotating ring 130 and the sliding surface of the fixed ring 230 are separated from each other, a fluid to be sealed is prevented from leaking to the air side (A) since the fluid flows in a circumferential direction due to the dynamic pressure generating grooves 131.

The dynamic pressure generating grooves 131 of Example 1 are provided on the rotating ring 130. However, dynamic pressure generating grooves that generate dynamic pressure for separating the sliding surfaces from each other when the rotating ring 130 rotates may be provided on the sliding surface of the fixed ring 230 facing the rotating ring 130. Dynamic pressure generating grooves may be provided on both the rotating ring 130 and the fixed ring 230.

### (Modification of Protrusions for Generating Airflow)

The plurality of protrusions 140 shown in Fig. 4 provided on the inner peripheral surface of the rotating ring 130 can be configured to extend in a direction perpendicular to the rotating direction. In this configuration, when the rotating ring 130 rotates, gas colliding with the protrusions 140 flows toward both directions along the central axis of the rotating ring 130 and radially inward from the rotating ring 130. However, since closed space is formed on the sealed region side (O) of the rotating ring 130, the gas colliding with the protrusions 140 mainly flows toward the air side (A).

As described above, the protrusions 140 function to generate an airflow from the rotating ring 130 side to the fixed ring 230 side (that is, to the air side (A)) when the rotating ring unit 100 rotates.

The plurality of protrusions 141 provided on the inner peripheral surface of the rotating ring 130 may be arranged to be inclined from the fixed ring 230 side to the rotating ring 130 side (from the air side (A) to the sealed region side (O)), from the upstream side toward the downstream side in the rotating direction of the rotating ring unit 100 (indicated by the arrow X in the figure). Thus, when the rotating ring 130 rotates, most of the gas colliding with the protrusions 141 flows toward the air side (A).

### <Advantageous Points of Sealing Device of Example 1>

When the rotating ring unit 100 of the sealing device 10 of Example 1 rotates, an airflow is generated from the rotating ring 130 side to the fixed ring 230 side (from the sealed region side (O) to the air side (A)). Thus, foreign matter hardly enters from the fixed ring 230 side to the rotating ring 130 side, and the entrance of the foreign matter into a place between the end surface of the rotating ring 130 and the end surface of the fixed ring 230 can be suppressed. In addition, the annular elastic body 220 or other members can be cooled by the airflow.

The dynamic pressure generating grooves 131 that generate dynamic pressure for separating sliding surfaces from each other when the rotating ring 130 rotates are provided on at least one of the rotating ring 130 and the fixed ring 230 of Example 1. Thus, the sliding friction between the rotating ring 130 and the fixed ring 230 can be reduced or eliminated.

### (Example 2)

Fig. 6 shows Example 2 of the present invention. Example 1 described above is configured to have protrusions for generating an airflow provided on the inner peripheral surface of the rotating ring. Example 2 is configured to have protrusions for generating an airflow provided on the outer peripheral surface of a cylindrical part. The other configurations and functions are the same as those of Example 1. The same constituents will be denoted by the same symbols, and their descriptions will be omitted.

Fig. 6 is a schematic cross-sectional view of a sealing device of Example 2. The sealing device of Example 2 has a substantially rotationally symmetrical shape except for some members, and Fig. 6 shows a cross-sectional view of the sealing device cut off at a plane including its central axis. The difference between the sealing device 10 of Example 2 and that of Example 1 lies only in protrusions for generating an airflow. Specifically, the protrusions 140 are not provided on the inner peripheral surface of the rotating ring 130 of the sealing device 10 of Example 2. The sealing device 10 of Example 2, however, has a plurality of protrusions 150 provided on an outer peripheral surface of the inner cylindrical part 111 of the annular member 110. The plurality of protrusions 150 generate an airflow from the rotating ring 130 side to the fixed ring 230 side when a rotating ring unit 100 rotates as the plurality of protrusions 140 in Example 1. The plurality of protrusions 150 may be configured to extend in a direction perpendicular to the rotating direction, or may be arranged to be inclined from the air side (A) to the sealed region side (O), from the upstream side toward the downstream side in the rotating direction of the rotating ring unit 100 as described in the modification of Example 1. The plurality of protrusions 150 may be integrally provided on the inner cylindrical part 111, or may be constituted by a member different from that of the inner cylindrical part 111 and attached to the inner cylindrical part 111. In the latter case, the plurality of protrusions 150 may be made of a material different from that of the inner cylindrical part 111 (the annular member 110). The material of the plurality of protrusions 150 is not limited to metal, but a resin material or a rubber material, for example, can be used.

The sealing device 10 of Example 2 configured as described above can also produce the same effects as those of the sealing device 10 of Example 1. A configuration may be employed in which the plurality of protrusions 140 are provided on the inner peripheral surface of the rotating ring 130 in addition to the plurality of protrusions 150 provided on the outer peripheral surface of the inner cylindrical part 111. Although not shown in the figures, dynamic pressure generating grooves that generate dynamic pressure for separating sliding surfaces from each other when the rotating ring 130 rotates are provided on at least one of the sliding surface of the rotating ring 130 facing the fixed ring 230 and the sliding surface of the fixed ring 230 facing the rotating ring 130 in Example 2 as well.

### (Example 3)

Fig. 7 shows Example 3 of the present invention. Example 1 described above is configured to have the rotating ring fixed to the annular member by being fitted into the fitting member provided on the annular member. Example 3 is configured to have a rotating ring directly fixed to an annular member by bonding. The other configurations and functions are the same as those of Example 1. The same constituents will be denoted by the same symbols, and their descriptions will be omitted.

Fig. 7 is a schematic cross-sectional view of a sealing device of Example 3. The sealing device of Example 3 has a substantially rotationally symmetrical shape except for some members, and Fig. 7 shows a cross-sectional view of the sealing device cut off at a plane including a central axis. The difference between the sealing device 10 of Example 3 and that of Example 1 lies only in a method of fixing a rotating ring 130 to an annular member 110a. Specifically, the fitting member 120 of Example 1 is not provided on the annular member 110a of the sealing device 10 of Example 3. The rotating ring 130 is fixed to an outward flange part 112 and an outer cylindrical part 113 of the annular member 110a by bonding using an adhesive. The other configurations are the same as those of Example 1, and thus their descriptions will be omitted. The sealing device 10 of Example 3 configured as described above can also produce the same effects as those of the sealing device 10 of Example 1. As for protrusions for generating an airflow, any of the configurations described in Example 1, the modification of Example 1, and Example 2 can be employed.

### (Example 4)

Fig. 8 shows Example 4 of the present invention. Example 1 described above is configured to have the rotating ring fixed to the annular member by being fitted into the fitting member provided on the annular member. Example 4 is configured to have a rotating ring directly fixed to an annular member by caulking. The other configurations and functions are the same as those of Example 1. The same constituents will be denoted by the same symbols, and their descriptions will be omitted.

Fig. 8 is a schematic cross-sectional view of a sealing device of Example 4. The sealing device of Example 4 has a substantially rotationally symmetrical shape except for some members, and Fig. 8 shows a cross-sectional view of the sealing device cut off at a plane including a central axis. The difference between the sealing device 10 of Example 4 and that of Example 1 lies only in a method of fixing the rotating ring 130 to the annular member 110b. Specifically, the fitting member 120 of Example 1 is not provided on the annular member 110b of the sealing device 10 of Example 4. The rotating ring 130 is fixed to the annular member 110b by caulking the tip end of the outer cylindrical part 113 of the annular member 110b (see a caulked part 114). The other configurations are the same as those of Example 1, and thus their descriptions will be omitted. The sealing device 10 of Example 4 configured as described above can also produce the same effects as those of the sealing device 10 of Example 1. As for protrusions for generating an airflow, any of the configurations described in Example 1, the modification of Example 1, and Example 2 can be employed.

### (Example 5)

Figs. 9 and 10 show Example 5 of the present invention. Example 5 is configured to have protrusions for generating an airflow which are different from those of Example 1. The other configurations and functions are the same as those of Example 1. The same constituents will be denoted by the same symbols, and their descriptions will be omitted.

Fig. 9 is a schematic cross-sectional view showing a sealing structure of Example 5. The sealing device of Example 5 has a substantially rotationally symmetrical shape except for some members, and Fig. 9 shows a cross-sectional view of the sealing device cut off at a plane including a central axis. Fig. 10 is a side view of a rotating ring of Example 5.

The difference between the sealing device 10 of Example 5 and that of Example 1 lies only in the configuration of a rotating ring 130a. Specifically, an annular protrusion part 140a that protrudes toward the fixed ring 230 side and extends up to a radially inward position of the fixed ring 230 is provided near the inner peripheral surface of the rotating ring 130a of Example 5. A plurality of protrusions 140a1 are provided on an inner peripheral surface of the annular protrusion part 140a.

The plurality of protrusions 140a1 generate an airflow from the rotating ring 130a side to the fixed ring 230 side when a rotating ring unit 100 rotates as the plurality of protrusions 140 of Example 1. The plurality of protrusions 140a1 may be configured to extend in the direction perpendicular to the rotating direction, or may be arranged to be inclined from the air side (A) to the sealed region side (O), from the upstream side toward the downstream side in the rotating direction of the rotating ring unit 100 as described in the modification of Example 1.

The sealing device 10 of Example 5 configured as described above can also produce the same effects as those of the sealing device 10 of Example 1. In addition, since the annular protrusion part 140a is provided at a radially inward position of the sliding part between the rotating ring 130a and the fixed ring 230 of Example 5, the entrance of foreign matter into the sliding part can be more effectively suppressed. An airflow is generated from the rotating ring 130a side to the fixed ring 230 side of Example 5 at a radially inward position of the fixed ring 230. Specifically, an airflow is generated at a position closer to the fixed ring 230 side in comparison to the respective embodiments. Therefore, the entrance of foreign matter into the sliding part between the rotating ring 130a and the fixed ring 230 can be more effectively suppressed.

A configuration may be employed in which the plurality of protrusions 140a1 are provided on the annular protrusion part 140a provided on the inner peripheral surface of the rotating ring 130a as described in Example 5 in addition to the plurality of protrusions 150 provided on the outer peripheral surface of the inner cylindrical part 111 as described in Example 2. A configuration can be employed in which the rotating ring 130a is directly fixed to an annular member by bonding or caulking as described in Examples 3 and 4. Although not shown in the figures, dynamic pressure generating grooves that generate dynamic pressure for separating sliding surfaces from each other when the rotating ring 130a rotates are provided on at least one of the sliding surface of the rotating ring 130a facing the fixed ring 230 and the sliding surface of the fixed ring 230 facing the rotating ring 130a in Example 5 as well.

### [Reference Signs List]

- 10: Sealing device
- 100: Rotating ring unit
- 110, 110a, 110b: Annular member
- 111: Inner cylindrical part
- 112: Outward flange part
- 113: Outer cylindrical part
- 114: Caulked part
- 120: Fitting member
- 121: Cylindrical part
- 122: Inward flange part
- 123: Outward flange part
- 130, 130a: Rotating ring
- 131: Dynamic pressure generating groove
- 140, 141, 150, 140a1: Protrusion
- 140a: Annular protrusion part
- 200: Fixed ring unit
- 210: Reinforcing ring
- 211: Cylindrical part
- 212: Inward flange part
- 220: Annular elastic body
- 221: Fixed part
- 222: Tapered part
- 223: Cylindrical part
- 224: Inward flange part
- 230: Fixed ring
- 500: Rotating shaft
- 600: Housing

## Claims

1. A sealing device that seals an annular gap between a rotating shaft and a housing having a shaft bore into which the rotating shaft is inserted, the sealing device comprising:
a rotating ring unit provided to the rotating shaft; and
a fixed ring unit provided to the housing, wherein
the rotating ring unit includes:
an annular member having a cylindrical part fixed to the rotating shaft and an outward flange part provided at an end of the cylindrical part; and
a rotating ring fixed to the annular member with an annular gap formed between the rotating ring and an outer peripheral surface of the cylindrical part,
the fixed ring unit includes:
a reinforcing ring fixed to the shaft bore of the housing;
a fixed ring configured to slide on an end surface of the rotating ring; and
an annular elastic body, one end of which is fixed to the reinforcing ring and the other end of which is fixed to the fixed ring, the annular elastic body pressing the fixed ring against the rotating ring, and
a plurality of protrusions configured to generate an airflow from a rotating ring side to a fixed ring side when the rotating ring unit rotates are provided on at least one of an inner peripheral surface of the rotating ring and an outer peripheral surface of the cylindrical part.

2. The sealing device according to claim 1, wherein
each of the plurality of protrusions is inclined from the fixed ring side to the rotating ring side, from an upstream side toward a downstream side in a rotating direction of the rotating ring unit.

3. The sealing device according to claim 1 or 2, wherein
an annular protrusion part that protrudes toward the fixed ring side and extends up to a radially inward position of the fixed ring is provided near the inner peripheral surface of the rotating ring, and
the plurality of protrusions are provided on an inner peripheral surface of the annular protrusion part.

4. The sealing device according to any one of claims 1, 2, and 3, wherein
a dynamic pressure generating groove is provided on at least one of a sliding surface of the rotating ring facing the fixed ring and a sliding surface of the fixed ring facing the rotating ring, the dynamic pressure generating groove being configured to generate dynamic pressure for separating the sliding surfaces from each other when the rotating ring rotates.
